# EUROPEAN PATENT APPLICATION

(11) **EP 2 597 704 A2**
(43) Date of publication of application: **29.05.2013**
(21) Application number: 11809843.3
(22) Date of filing: 19.07.2011
(51) Int. Cl.: H01M 2/30

(54) **SECONDARY BATTERY HAVING A DIFFERENTIAL LEAD STRUCTURE**

(30) Priority: 19.07.2010 KR 20100069499
(71) Applicant: LG Chem, Ltd., Youngdungpo-gu Seoul 150-721 (KR)
(72) Inventor: LEE, Eun-Ju, Daejeon 302-834 (KR); SHIN, Young-Joon, Daejeon 305-761 (KR)
(74) Representative: Cabinet Plasseraud
(86) International application number: PCT/KR2011/005293
(87) International publication number: WO 2012/011716

(57) **Abstract**

Disclosed is a secondary battery of a differential lead structure including an electrode assembly including a cathode plate having a cathode tab, an anode plate having an anode tab, and a separator interposed between the cathode plate and the anode plate, a battery casing to receive the electrode assembly, a cathode lead electrically connected to the cathode tab, and an anode lead electrically connected to the anode tab and made of a different material from the cathode lead, wherein the cathode lead and the anode lead have a differential cross sectional area such that the lead having lower electrical conductivity has a larger cross sectional area than the other lead having higher electrical conductivity.

## Description

### CROSS-REFERENCE TO RELATED APPLICATION

This application claims priority from Korean Patent Application No. 10-2010-0069499, filed on July 19, 2010, the entire disclosure of which is incorporated herein by reference for all purposes.

### BACKGROUND

### Field

The present invention relates to a secondary battery of an improved electrical structure, and more particularly, to a secondary battery having a lead of differential electrical characteristics to improve the electrical characteristics of a high-capacity secondary battery.

### Description of Related Art

Secondary batteries have high applicability depending on the product group and excellent electrical characteristics such as high energy density, and thus are commonly being used as electric power sources of electric vehicles (EVs) or hybrid vehicles (HVs) as well as mobile devices.

These secondary batteries do not generate by-products that come with the energy consumption, and thus, are environmentally friendly and can improve the energy efficiency. For these reasons, secondary batteries are gaining attention as alternative energy sources for fossil fuels.

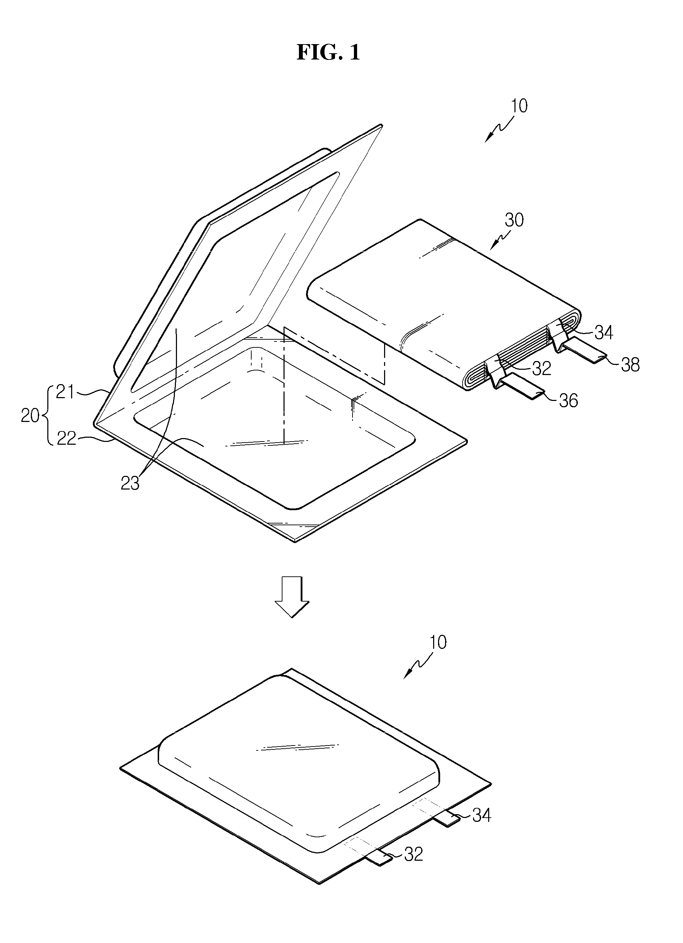

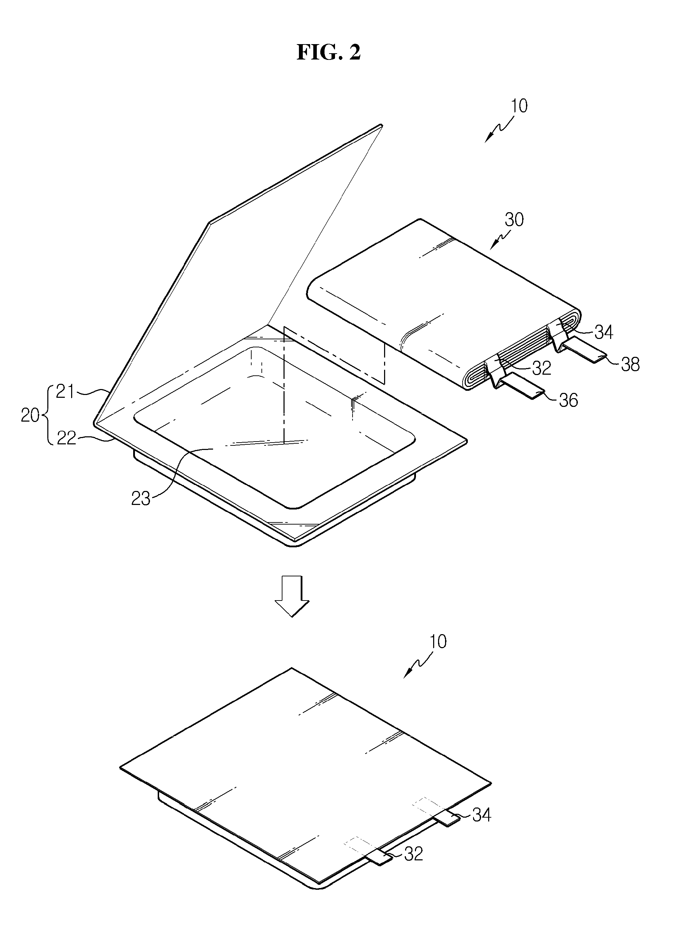

Secondary batteries (cells) may be classified into pouch-type batteries, cylindrical batteries, prismatic batteries, and the like, based on the shape or structure of its casing. Also, secondary batteries may be sorted into jelly-roll (winding) type batteries, stack type batteries, stack/folding type batteries, and the like, based on the structural characteristics of an electrode assembly. Since these batteries may have corresponding basic principle and configuration depending on the type, a structure of a secondary battery is briefly described below with reference to FIGS. 1 and 2 illustrating pouch-type secondary batteries.

Referring to FIG. 1, a pouch-type secondary battery 10 basically includes a pouch-shaped battery casing 20 and an electrode current collector 30 (also called an electrode assembly). The electrode current collector 30 includes a cathode plate, an anode plate, and a separator interposed therebetween to electrically insulate the cathode plate from the anode plate.

The electrode current collector 30 has a cathode tab 32 extending from the cathode plate and an anode tab 34 extending from the anode plate. The cathode tab 32 and the anode tab 34 are respectively connected to a cathode lead 36 and an anode lead 38 by ultrasonic welding. The electrode leads 36 and 38 are made of conductive materials, and serve as an electrode interface to electrically connect the secondary battery 10 to external devices.

As shown in FIG. 1, the electrode current collector 30 is mounted in an inner space 23 of the pouch-shaped casing 20 where an electrolyte will be injected, followed by post-processing such as sealing, aging, forming, and the like, resulting in a secondary cell.

Although this embodiment shows the two-part pouch-shaped casing 20 composed of an upper casing 21 and a lower casing 22 and the receiving space 23 formed in both of the casings 21 and 22 as shown in FIG. 1, the present invention is not limited in this regard. According to alternative embodiments, the receiving space 23 may be formed in any one of the casings 21 and 22 as shown in FIG. 2.

It is obvious to an ordinary person skilled in the art that a variety of combinations or modifications may be made to a casing (for example, an integrated casing or a two-part casing) or a space for receiving an electrode current collector, depending on the raw material of the casing, properties or specification of a product, processing conditions, and the like.

An individual secondary battery is referred to as a cell, and a group of secondary batteries is referred to as a battery assembly or a battery pack. Unless otherwise mentioned in the present specification, a secondary battery is defined not only as a cell, but also as a battery assembly or a battery pack.

Recently, with the emphasis on the energy efficiency and the demand for capacity expansion, the use of a high-capacity or large-capacity secondary battery is increasing. Generally, a secondary battery is repetitively charged/discharged by electrochemical reactions. With the increasing battery capacity, the heat generated during charge/discharge dramatically increases.

Heat generation may be analyzed in various aspects. The electrical properties of an electrode structure may be mentioned in one aspect. Since a high electric current flows particularly between a high-capacity secondary battery and external devices, and the electrode structure, in particular, an electrode lead acts as an interface to electrically connect the high-capacity secondary battery to the external devices, the electrical resistance of the electrode lead may be one cause of heat generation considerably affecting the performance of the secondary battery.

Since heat generation fatally deteriorates the performance of the secondary battery allowing electrochemical reactions as described above, there is an urgent need to solve these problems of the secondary battery confronted in a high electric current atmosphere.

In another aspect, the material properties of a secondary battery may be mentioned. Generally, a cathode and an anode are made of different materials, for example, a cathode is mainly made of aluminum and an anode is mainly made of copper.

As a result, a non-uniform resistance between the electrodes even in the same battery may occur, leading to local or partial heat generation or side reactions. The local or partial heat generation may deteriorate the performance of the battery and accelerate the degradation rate of the battery.

Meanwhile, to improve the resistance characteristics of a secondary battery, simply enlarging an electrode structure may be contemplated. However, this may cause a short circuit between electrodes when swelling occurs or external physical impacts are applied. Accordingly, there is a need to generally and comprehensively solve the foregoing problems.

### DISCLOSURE

It is an object of the present invention to provide a secondary battery having a differential electrode lead structure in which an electrode lead has a differential thickness or cross sectional area to improve the applicability for a high-capacity secondary battery and to strongly cope with the partial heat generation and the deterioration in performance of the battery caused by the partial heat generation.

Additional features of the invention will be set forth in the description which follows, and in part will be apparent from the description, or may be learned by practice of the invention.

In order to achieve this object, a secondary battery of a differential lead structure according to the present invention may include an electrode assembly including a cathode plate having a cathode tab, an anode plate having an anode tab, and a separator interposed between the cathode plate and the anode plate, a battery casing to receive the electrode assembly, a cathode lead electrically connected to the cathode tab, and an anode lead electrically connected to the anode tab and made of a different material from the cathode lead, wherein the cathode lead and the anode lead have a differential cross sectional area such that the lead having lower electrical conductivity has a larger cross sectional area than the other lead having higher electrical conductivity.

To implement a more preferred embodiment, the cathode lead and the anode lead may have a differential thickness such that the lead having lower electrical conductivity has a larger thickness than the other lead having higher electrical conductivity.

Preferably, the cathode lead is made of aluminum, and the anode lead is made of copper.

Preferably, the thickness of the cathode lead may be 1.2 to 2.0 times larger than the thickness of the anode lead, or the cross sectional area of the cathode lead may be 1.2 to 2.0 times larger than the cross sectional area of the anode lead.

To implement a more preferred embodiment, the cathode lead and the anode lead may be disposed at different sides of the battery casing.

In order to achieve this object, a vehicle according to the present invention may include the secondary battery of a differential lead structure.

It is to be understood that both the foregoing general description and the following detailed description are exemplary and explanatory and are intended to provide further explanation of the invention as claimed.

### DESCRIPTION OF DRAWINGS

The accompanying drawings illustrate preferred embodiments of the present disclosure and, together with the foregoing disclosure, serve to provide further understanding of the technical spirit of the present disclosure. However, the present disclosure is not to be construed as being limited to the drawings.
FIG. 1 is a perspective view illustrating an exemplary basic configuration of a secondary battery.
FIG. 2 is a perspective view illustrating another exemplary basic configuration of a secondary battery.
FIG. 3 is a plane view illustrating each element of a secondary battery according to an embodiment of the present invention.
FIG. 4 is an exploded perspective view illustrating a configuration of an electrode assembly of a secondary battery according to an embodiment of the present invention.
FIG. 5 is a view illustrating an interconnection relationship between an electrode tab and an electrode lead in a secondary battery according to an embodiment of the present invention.
FIG. 6 is a view illustrating a structural feature of an electrode lead according to a preferred embodiment of the present invention.
FIG. 7 is a view illustrating a structural feature of an electrode lead according to another preferred embodiment of the present invention.
FIG. 8 is a view illustrating a structural feature of an electrode lead according to still another preferred embodiment of the present invention.

### DETAILED DESCRIPTION

The present invention will now be described in detail with reference to the accompanying drawings. Prior to description, it should be understood that terms and words used in the specification and the appended claims should not be construed as having common and dictionary meanings, but should be interpreted as having meanings and concepts corresponding to technical ideas of the present invention in view of the principle that the inventor can properly define the concepts of the terms and words in order to describe his/her own invention as best as possible.

Accordingly, the description proposed herein is just a preferable example for the purpose of illustrations only, not intended to limit the scope of the invention, so it will be apparent to those skilled in the art that various modifications and variation can be made in the present invention without departing from the spirit or scope of the invention.

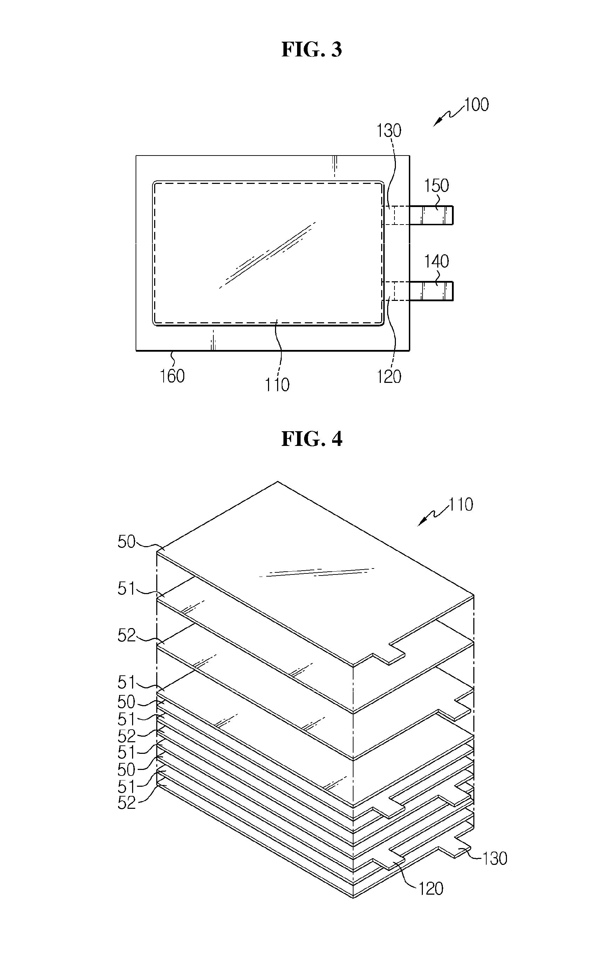

FIG. 3 is a plane view illustrating each element of a secondary battery of a differential lead structure (hereinafter referred to as a secondary battery) 100 according to an embodiment of the present invention. As shown in FIG. 3, the secondary battery 100 according to an embodiment of the present invention includes an electrode assembly 110, an electrode tab 120 and 130, an electrode lead 140 and 150, and a battery casing 160.

As shown in FIG. 4, the electrode assembly 110 includes a cathode plate 50, an anode plate 52, and a separator 51 having a predetermined shape interposed therebetween that are alternately stacked on top of each other. According to embodiments, various types of electrode assemblies may be applied, for example, winding type, stack type, stack/folding type, and the like, as described above.

The cathode plate 50, also called a cathode current collector, is mainly made of aluminum, but may be made of stainless steel, nickel, titanium, sintered carbon, aluminum, or stainless steel surface-treated with carbon, nickel, titanium or silver. The material for the cathode plate 50 is not particularly limited if it has high conductivity and does not cause a chemical change to the secondary battery.

The cathode plate 50 has at least one cathode tab 120 at a certain area. The cathode tab 120 may be formed by extending the cathode plate 50, or by welding a conductive member to a certain area of the cathode plate 50. Alternatively, the cathode tab 120 may be formed by coating a certain area of the periphery of the cathode plate 50 with a cathode material, followed by drying. However, the present invention is not limited in this regard.

The anode plate 52, also called an anode current collector, is mainly made of copper, but may be made of stainless steel, aluminum, nickel, titanium, sintered carbon, copper, stainless steel surface-treated with carbon, nickel, titanium, or silver, or aluminum-cadmium alloy.

The cathode plate 50 and the anode plate 52 may have a micro concavo-convex structure on the surface thereof to improve the bond strength of an active material. The micro concavo-convex structure may take the form of a film, a sheet, a foil, a microporous structure, a foam, a non-woven structure, and the like.

Like the cathode plate 50, the anode plate 52 has at least one anode tab 130 at a certain area. The anode tab 130 may be formed by extending the anode plate 52 or by welding a conductive member to a certain area of the anode plate 52. Alternatively, the anode tab 130 may be formed by coating a certain area of the periphery of the anode plate 52 with an anode material, followed by drying. However, the present invention is not limited in this regard.

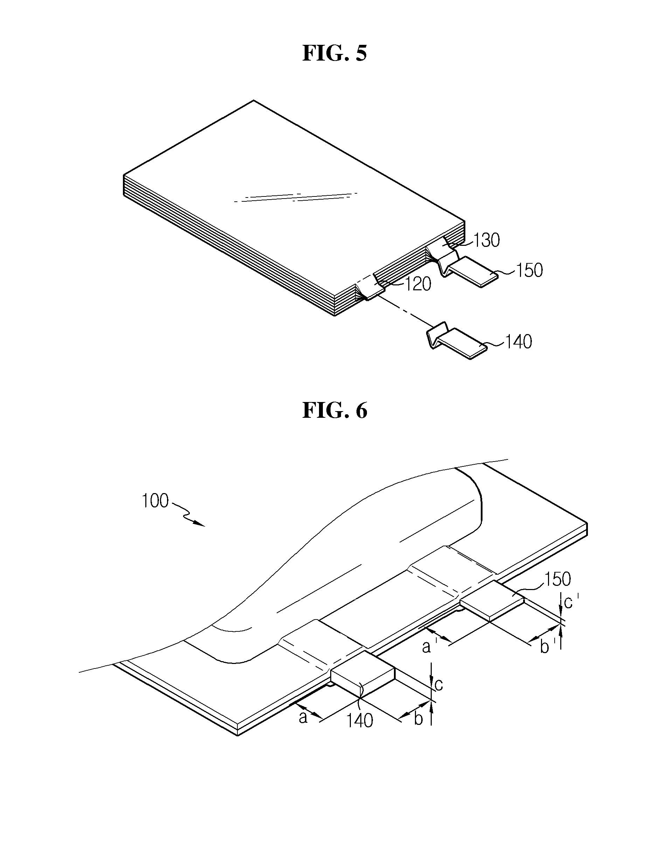

Generally, a plurality of the cathode tabs 120 and a plurality of the anode tabs 130 are respectively formed at the cathode plates 50 and the anode plates 52, as shown in FIG. 4. A plurality of the tabs 120 and 130 are assembled in a predetermined direction and connected to corresponding leads 140 and 150, respectively, as shown in FIG. 5.

In other words, one end of each lead 140 and 150 is respectively connected to the corresponding tab 120 and 130, and the other end is exposed outside the battery casing 160. In this configuration, the cathode lead 140 and the anode lead 150 act as a battery terminal of the corresponding secondary battery.

Preferably, the cathode lead 140 and the anode lead 150 are made of different materials depending on the electrode structure connected thereto, so as to maintain the equality of electrical characteristics with the tabs and the electrode plates connected thereto and to improve the electrical efficiency during charge/discharge cycles.

That is, the cathode lead 140 is preferably made of a conductive material, for example, aluminum (A1), and the anode lead 150 is preferably made of copper (Cu) or copper coated with nickel (Ni), in consideration of the material properties of the electrode plates and the tabs, the magnitude of an electrical resistance value, the economical efficiency, and the like. Also, this is to maintain the most stable state at the corresponding electrode potential of the secondary battery.

Since the electrode structure having the electrode lead is made of dual material as described above, the electrical resistance is applied more to the cathode (A1) than the anode (Cu) in the secondary battery 100.

When a small-sized secondary battery is temporarily charged/discharged for a short time, the inequality of electrical resistance of the electrode is not critical. However, when a large-sized secondary battery is continuously charged/discharged in a repetitive manner, the battery will suffer from big trouble such as heat generation caused by a flow of a high electric current or deterioration in performance of the battery that may occur due to the heat generation.

Furthermore, the difference in electrical resistance caused by the dual material of the electrode structure may accelerate the partial or local heat generation and non-uniform deterioration in performance. To solve this problem, it is preferred to equalize the electrical resistance.

For this purpose, the electrode lead of the present invention may be configured such that the cathode lead 140 of aluminum having a relatively lower electrical conductivity has a larger cross sectional area than that of the anode lead 150 of copper having a relatively higher electrical conductivity, as shown in FIG. 6.

That is to say, the cross sectional area of a conductive medium through which an electric current flows is inversely proportional to the electrical resistance. By using this relationship, it is possible to increase the cross sectional area of the cathode lead 140 having a relatively lower electrical conductivity (large resistance component) and decrease the cross sectional area of the anode lead 150 having a relatively higher electrical conductivity, thereby ensuring the equality of electrical resistance of the electrodes.

Here, whether the cross sectional area is large or small is determined based on a relative concept, but not based on an absolute concept. Accordingly, when the cross sectional area of the electrode lead is large, it should be interpreted that the cross sectional area of one electrode lead is larger than that of the other electrode lead among electrode leads having different electrical conductivities, as described above.

Meanwhile, when the secondary battery is overcharged or suffers from a rapid change in electrical atmosphere, an electrolyte decomposes at the cathode and lithium metal is deposited at the anode. As a result, the performance of the secondary battery may deteriorate and gas may be generated from chemical reactions.

The electrolyte includes a solvent such as ethylene carbonate, propylene carbonate, and the like. These solvents decompose at high temperature to generate gas, leading to pressure rise, which implies possible swelling. The swelling may cause an electrical short, and in some cases, when external impacts are applied, sparks may be generated, leading to ignition.

As described above, swelling changes the physical size or the volume of the secondary battery, which implies the likelihood of the physical contact (short circuit) between the electrode leads.

To prevent or minimize the electrical short of the secondary battery, the electrical resistance of the electrode leads needs to be relatively adjusted as described above. As shown in FIG. 6, it is possible to adjust the cross sectional areas of the electrode leads 140 and 150 by differentiating the widths b and b' of the electrode leads 140 and 150. However, this has a relatively high likelihood of the physical contact (short circuit) between the electrodes caused by swelling. Accordingly, in an embodiment where the electrode leads are disposed at the same side of the battery casing as shown in FIG. 6, it is more preferred to differentiate the thickness parameters c and c' of the cathode lead and the anode lead.

That is to say, in an embodiment where the electrode leads are disposed at the same side of the battery casing, the electrode leads are preferably spaced away as distantly from each other as possible within the range in which the limitations of fabrication of the secondary battery are permitted. Also, it is preferred to relatively adjust the thickness c and c' of the electrode leads, as suggested by the present invention, to ensure a difference in electrical resistance between the electrode leads.

To implement a more preferred embodiment, it is preferred to adjust the cathode lead 140 to be 1.2 to 2.0 times as thick as the anode lead 150. Since the electrical conductivity of aluminum is about 60% of the electrical conductivity of copper, when the electrode lead has a differential thickness in consideration of the electrical characteristics such as electrical conductivity, a substantially equal level of electrical resistance value can be maintained, allowing for a tolerance range.

As described above, in an embodiment where the electrode leads are disposed at the same side of the battery casing as shown in FIG. 6, it is preferred to adjust the cross sectional area of the electrode leads by differentiating the thickness c and c' of the cathode lead 140 and the anode lead 150 while equalizing the length parameters a and a' and the width parameters b and b' of the cathode lead 140 and the anode lead 150, in terms of the battery designing based on electrical characteristics, the processing line conditions, and the efficiency of a welding process. Also, it is obvious to an ordinary person skilled in the art that the resistance components of the electrode leads 140 and 150 may be adjusted by adjusting the length a and a' of the electrode leads 140 and 150.

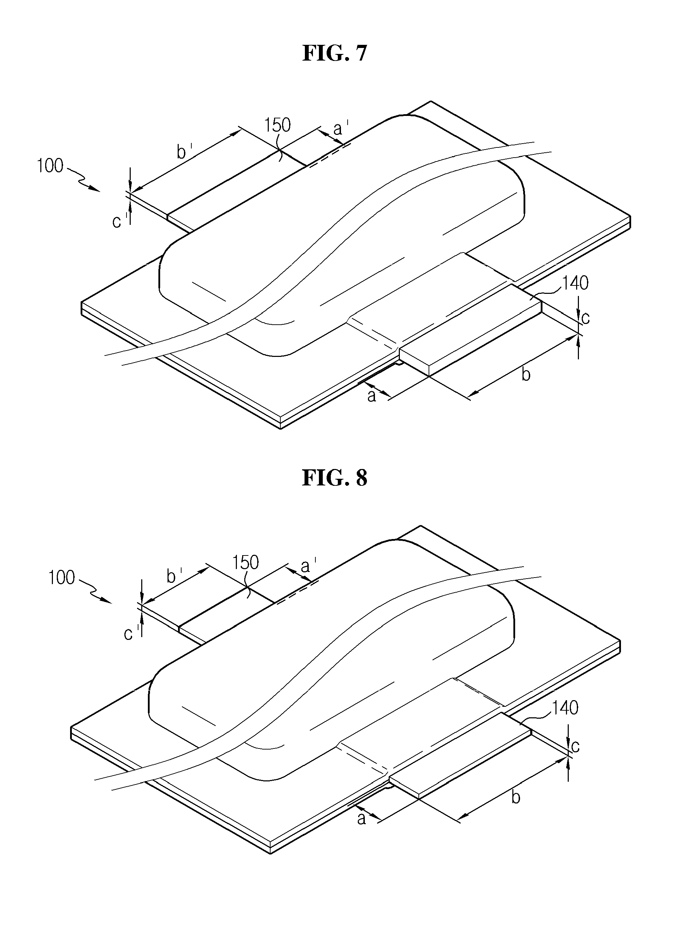

Hereinafter, another embodiment of the present invention is described with reference to FIGS. 7 and 8. The description of configuration, structure and function of the secondary battery according to this embodiment equal to or corresponding to the description of the previous embodiment is omitted herein.

FIGS. 7 and 8 illustrate the cathode lead 140 and the anode lead 150 disposed at different sides of the battery casing 160 according to another embodiment of the present invention.

When the cathode lead 140 and the anode lead 150 are disposed at different sides of the battery casing 160, a likelihood of a short circuit caused by swelling is relatively low. Accordingly, the width parameters of the electrode leads may be adjusted more freely.

Although FIGS. 7 and 8 show the electrode leads disposed at the opposing upper and lower sides of the battery casing 160, a variety of combinations may be made to the electrode leads, including electrode leads disposed at the opposing left and right sides of the battery casing. In this case, the cathode tabs and the anode tabs preferably have the corresponding configuration.

Referring to FIG. 7, the cross sectional areas of the electrode leads 140 and 150 are adjusted by differentiating the thickness of the electrode leads 140 and 150. The thickness c of the cathode lead 140 made of a material having lower electrical conductivity is larger than the thickness c' of the anode lead 150 made of a material having higher electrical conductivity. As a result, the equality of the total electrical resistance of the electrode leads 140 and 150 may be ensured.

Referring to FIG. 8, the cross sectional areas of the electrode leads 140 and 150 are adjusted by differentiating the width of the electrode leads 140 and 150. The width b of the cathode lead 140 made of a material having lower electrical conductivity is larger than the width b' of the anode lead 150 made of a material having higher electrical conductivity.

According to a combination of the embodiment of FIG. 7 and the embodiment of FIG. 8, it is obvious to an ordinary person skilled in the art that the electrode leads 140 and 150 may have a differential thickness parameter and a differential width parameter to ensure the equality of electrical resistance.

The secondary battery of the present invention may be applied to battery packs of vehicles. That is, the vehicle of the present invention may include the secondary battery according to the present invention. For example, the electric vehicle or hybrid vehicle of the present invention may include the secondary battery according to the present invention.

According to teachings above, the secondary battery of a differential lead structure according to the present invention may have improved performance by effectively dissipating or equalizing the electrical resistance applied to the secondary battery in the presence of a high electric current.

Also, the secondary battery of a differential lead structure according to the present invention may have the economical efficiency and competitive advantages by solving the non-uniform resistance problem of the electrodes using the differential cross-sectional area or thickness of the electrode leads depending on the electrode polarity, thereby efficiently preventing the local or partial heat generation and non-uniform degradation of the battery.

## Claims

1. A secondary battery of a differential lead structure comprising:
an electrode assembly including a cathode plate having a cathode tab, an anode plate having an anode tab, and a separator interposed between the cathode plate and the anode plate;
a battery casing to receive the electrode assembly;
a cathode lead electrically connected to the cathode tab; and
an anode lead electrically connected to the anode tab made of a different material from the cathode lead,
wherein the cathode lead and the anode lead have a differential cross sectional area such that the lead having lower electrical conductivity has a larger cross sectional area than the other lead having higher electrical conductivity.

2. The secondary battery of a differential lead structure according to claim 1,
wherein the cathode lead and the anode lead have a differential thickness such that the lead having lower electrical conductivity has a larger thickness than the other lead having higher electrical conductivity.

3. The secondary battery of a differential lead structure according to claim 2,
wherein the cathode lead is made of aluminum.

4. The secondary battery of a differential lead structure according to claim 3,
wherein the anode lead is made of copper.

5. The secondary battery of a differential lead structure according to claim 4,
wherein the thickness of the cathode lead is 1.2 to 2.0 times larger than the thickness of the anode lead.

6. The secondary battery of a differential lead structure according to claim 1,
wherein the cross sectional area of the cathode lead is 1.2 to 2.0 times larger than the cross sectional area of the anode lead.

7. The secondary battery of a differential lead structure according to claim 1,
wherein the cathode lead and the anode lead are disposed at different sides of the battery casing.

8. A vehicle including a secondary battery of a differential lead structure defined in any one of claims 1 to 7.
